# FASCICULE DE BREVET EUROPEEN

(11) **EP 2 311 098 B1**
(45) Date de publication et mention de la délivrance du brevet: **22.02.2012**
(21) Numéro de dépôt: 09784367.6
(22) Date de dépôt: 20.03.2009
(51) Int. Cl.: H01L 31/042

(54) **Ensemble composé d'au moins un panneau photovoltaïque et d'une structure de support**
Aus mindestens einem photovoltaischen Paneel und aus einer Trägerstruktur bestehende Anordnung
Assembly composed of at least one photovoltaic panel and a support structure

(30) Priorité: 14.07.2008 EP 08012689
(43) Date de publication de la demande: 20.04.2011
(73) Titulaire: Api New Energy, 2134 Luxembourg (LU)
(72) Inventeur: BAEYENS, Bernard, F-06480 La Colle sur Loup (FR)
(74) Mandataire: de Zeeuw, Johan Diederick
(86) Numéro de dépôt international: PCT/FR2009/050490
(87) Numéro de publication internationale: WO 2010/007256

(56) Documents cités:
- US-A- 5 060 437
- US-A1- 2009 099 761
- ZEGGER-MURPHY C: "Visual Guidance: Solar LED Aviation Lighting and Solar Power Systems Technology Solutions" www.airporttech.tc.faa.gov 2007 FAA Worldwide Airport Technology Transfer Conference (ATT07), Atlantic City, NJ, USA 21 avril 2007 (2007-04-21), 18 avril 2007 (2007-04-18), pages 1-15, XP002565162 Extrait de l'Internet: URL:http://www.airporttech.tc.faa.gov/napt f/att07/2007/Papers/P07085%20Zegger-Murphy .pdf> [extrait le 2010-01-22]
- Anonyme: "ERGL Elevated Runway Guide Light" www.solarairportlights.com Divulgation internet 28 décembre 2007 (2007-12-28), XP002565163 Extrait de l'Internet: URL:http://web.archive.org/web/20071228084 422/www.solarairportlights.com/content/pro ducts/ViewProduct/Default.aspx?i=ergl> [extrait le 2010-01-25]

## Description

La présente invention concerne un ensemble frangible composé d'éléments consistant en au moins un panneau photovoltaïque et en une pluralité de modules formant une structure de support permettant de maintenir ledit panneau photovoltaïque dans une position fixe par rapport à une surface.

L'ensemble selon l'invention est particulièrement adapté pour la technologie photovoltaïque dans laquelle l'énergie solaire est convertie en énergie électrique. En vue de cette conversion, on utilise notamment des cellules photovoltaïques qui comprennent des cristaux de silicium.

Ces cellules photovoltaïques sont produites de façon industrielle sous des formats standards. Plusieurs cellules photovoltaïques sont connectées les unes aux autres et assemblées en des modules rigides que l'on nomme « panneaux photovoltaïques ».

De tels panneaux photovoltaïques comprennent, en principe, un premier élément permettant de recevoir les cellules photovoltaïques, une plaque d'une matière translucide comme du verre, par exemple. Ces plaques sont adaptées pour couvrir les cellules photovoltaïques recevant sur un premier côté des rayons solaires et, comportant, sur le côté opposé, une couche permettant de protéger les cellules photovoltaïques.

Grâce à l'utilisation de modules rigides, les cellules photovoltaïques peuvent être exposées aux rayons du soleil sur des structures de support, adaptées au sol ou sur des bâtiments. Grâce à l'utilisation des structures de support, l'inclinaison des panneaux photovoltaïques peut être réglée par rapport à la position du soleil. Un système photovoltaïque peut être soit indépendant soit connecté au réseau de distribution électrique.

Selon l'invention, plusieurs panneaux photovoltaïques pourront être raccordés en série et connectés au réseau de distribution électrique grâce à un convertisseur de courant continu (DC) / courant alternatif (AC) permettant d'injecter instantanément l'énergie solaire récupérée directement dans le réseau de distribution électrique.

Selon l'invention, l'ensemble est particulièrement adapté pour être utilisé sur des terrains sécurisés. Cela afin d'éviter que les ensembles des panneaux photovoltaïques et des structures de support soient accessibles au public.

De façon plus spécifique, l'ensemble selon l'invention est adapté pour être utilisé au sein d'infrastructures de transport, comme par exemple le long des pistes dans les aéroports, le long d'axes routiers ou encore le long d'axes ferroviaires.

Le document « Visual Guidance: Solar LED Aviation Lighting and Solar Power Systems Technology Solutions», www.airporttech.tc.faa.gov, 2007 FAA Worldwide Airport Technology Transfer Conference (ATT07), Atlantic City, NJ, USA, 16-18 avril 2007, pages 1-15, URL http://www.airporttech.tc.faa.gov/naptf/att07/2007/Papers/P07085%20Zeg ger-Murphy.pdf, 21 avril 2007 (D1) et le document « ERGL Elevated Runway Guide Light », www.solarairportlights.com, Divulgation internet URL http://webarchive.org/web/20071228084422/www.solarairportlights.com/co ntent/products/ViewProduct/Default.aspx?i=ergl, 28 décembre 2007 (D2), décrivent un dispositif comprenant deux éléments. Le premier élément concerne une lumière pouvant être utilisée dans des aéroports, dans un but de sécurité, par exemple le long des pistes. Un deuxième élément concerne un panneau photovoltaïque connecté sur une structure permettant de maintenir ledit panneau photovoltaïque dans une position fixe par rapport à ladite structure et dans lequel le panneau photovoltaïque est utilisé afin de produire de l'énergie pouvant être utilisée par la lumière.

L'ensemble composé de la lumière et du panneau photovoltaïque assure une disponibilité d'électricité permettant de faire fonctionner ladite lumière même dans des endroits éloignés.

Le dispositif selon les deux documents D1 et D2 cités ci-dessus comprend un panneau photovoltaïque fixé, de façon classique, sur une structure de support, dans lequel ladite structure de support est connectée sur le sol grâce à une connexion frangible. En d'autres termes, l'ensemble formé par la structure de support et le panneau photovoltaïque, connecté à cette structure de support, peut se déplacer par rapport à un support tel que le sol en cas d'impact sur l'ensemble formé par le panneau photovoltaïque et la structure de support.

Le document US 5,060,437 divulgue un dispositif de support en forme de poteau, ledit dispositif pouvant être utilisé pour fixer des dispositifs, tels que des dispositifs de communication, dans une position définie par rapport à une surface.

Le poteau selon le document US 5,060,437 est connecté à cette surface grâce à une connexion frangible. Cela signifie que l'ensemble, formé par le poteau et les dispositifs connectés à ce poteau, peut se déplacer en cas d'impact d'un moyen de transport, ce qui permet d'accroître la sécurité des occupants dudit moyen de transport.

Le but de l'invention est de fournir un ensemble composé d'un panneau et d'une structure de support, adapté pour être utilisé au sein des infrastructures de transport sans mettre en danger les occupants desdits moyens de transport, en cas d'impact d'un de ces moyens de transport contre l'ensemble. L'ensemble est dit frangible dans ces circonstances.

L'objet de la présente invention concerne un ensemble frangible selon la revendication 1. Des réalisations spécifiques sont couvertes par les revendications dépendantes.

L'ensemble selon l'invention consiste en au moins un panneau photovoltaïque et en une structure de support formée de plusieurs modules dans lequel le panneau photovoltaïque et la structure de support sont assemblés l'un à l'autre grâce à des connexions frangibles. Les différents éléments étant connectés grâce à des connexions frangibles signifie que l'ensemble selon l'invention perd son intégrité lors d'un impact, se brisant aisément afin de se désolidariser en plusieurs éléments qui ont chacun une masse limitée.

Selon l'invention, la structure de support est elle-même frangible, ce qui signifie que non seulement la connexion entre le panneau photovoltaïque et la structure de support se sépare ou se brise en cas d'impact, mais également que la structure de support elle-même perd son intégrité et se désolidarise en plusieurs éléments en cas d'impact.

Dans le présent texte, un objet frangible est un objet de faible masse conçu pour se briser, se déformer ou encore céder sous l'effet d'un impact afin de représenter le moins de risques possibles pour l'objet, tel qu'un moyen de transport, qui entrerait en collision avec l'objet frangible.

Une structure frangible est une structure comprenant plusieurs objets frangibles. Une connexion frangible est une connexion entre différents éléments d'une structure qui est adaptée pour pouvoir se briser, se déformer ou autre, et permettre aux différents éléments de ladite structure de se désolidariser aisément lors d'un impact sur ladite structure.

Selon l'invention, il est possible que les différents éléments de l'ensemble soient fixés les uns aux autres en emmagasinant de l'énergie dans l'ensemble. En cas d'impact sur l'ensemble, les connexions entre les différents éléments dudit ensemble sont séparées ou brisées et l'énergie emmagasinée dans l'ensemble est utilisée afin d'aider les différents éléments à se désolidariser les uns des autres, évitant ainsi qu'une concentration de masse ne soit formée. Cette énergie emmagasinée dans l'ensemble aide ledit ensemble à minimaliser les risques pour l'objet, tel qu'un moyen de transport en mouvement, d'être mis en danger lors d'un impact avec l'ensemble selon l'invention.

Selon l'invention, il est prévu que l'ensemble d'un panneau photovoltaïque et de la structure de support soit frangible. Cela signifie qu'en cas d'impact, l'ensemble est désolidarisé en différents éléments ayant chacun une masse limitée. Afin de s'assurer que la masse du panneau soit relativement limitée, mais contienne en même temps suffisamment de cellules photovoltaïques, il est possible d'utiliser un panneau photovoltaïque rectangulaire. Ce panneau contient, par exemple, deux ou trois cellules photovoltaïques dans sa largeur et jusqu'à, par exemple, dix cellules photovoltaïques dans sa longueur. L'encadrement autour du périmètre du panneau peut assurer suffisamment de rigidité audit panneau.

Pour voir la structure de support d'un pied permet à l'ensemble d'être positionné sur une surface sans nécessiter de gros travaux d'installation de l'ensemble sur le support. Le pied peut contenir, par exemple, un élément relativement lourd tel que du béton. L'installation des panneaux sera réalisée de préférence dans des périodes lorsqu'il n'y a pas de circulation des moyens de transport. En effet, afin de limiter la coupure de circulation des moyens de transport et de minimiser le risque à l'installation, il est préférable de prévoir une installation rapide et simple de l'ensemble.

Selon l'invention, il est prévu que le raccordement électrique de l'ensemble puisse se désolidariser en cas d'impact. La présence d'une connexion électrique frangible permet la coupure du contact électrique en cas d'impact.

Afin d'optimiser le rendement d'un panneau photovoltaïque, il est avantageux de contrôler l'inclinaison dudit panneau photovoltaïque par rapport à une surface afin de s'assurer que cette inclinaison soit optimale par rapport aux rayons solaires. A l'aide de deux inclinaisons possibles, le panneau peut être dirigé vers une position « hiver » et vers une position « été ».

Les avantages et les différents détails de l'invention seront mieux appréciés à la lecture de la description qui suit et qui fait référence aux dessins dans lesquels :
- la figure 1 montre en détail un panneau photovoltaïque,
- la figure 2 montre une vue, en coupe, du panneau selon la figure 1,
- la figure 3 montre un exemple d'ensemble sur un pieu frangible,
- la figure 4 montre un exemple d'ensemble comportant une connexion électrique frangible,
- la figure 5 montre, en perspective, une structure de support pour l'ensemble selon l'invention,
- la figure 6 montre l'utilisation des agrafes frangibles permettant de connecter les différents éléments de l'ensemble selon l'invention,
- la figure 7 montre un mode de réalisation d'un ensemble selon l'invention permettant d'utiliser des agrafes pour fixer des panneaux photovoltaïques sur une structure de support,
- la figure 8 montre un mode de réalisation d'un ensemble selon l'invention dans lequel les moyens de fixation sont utilisés directement sur l'extérieur des panneaux,
- la figure 9 montre un exemple d'ensemble dans lequel une partie de la structure, pour fixer des panneaux photovoltaïques, est directement posée sur une surface,
- la figure 10 montre un mode de réalisation d'un ensemble selon l'invention dans lequel les panneaux photovoltaïques sont fixés sur une structure de support comportant des connexions frangibles,
- la figure 11 montre, de façon schématique,
   une structure de support permettant de fixer les panneaux suivant deux inclinaisons par rapport à une surface,
- la figure 12 montre une structure de support permettant de suivre le mouvement du soleil (tracking),
- la figure 13 montre une structure de support comportant un axe de rotation vertical.

L'invention concerne un ensemble composé d'au moins un panneau photovoltaïque et d'une structure permettant de maintenir ledit panneau photovoltaïque dans une position fixe par rapport à une surface. L'ensemble selon l'invention est frangible.

Cette frangibilité a pour effet que l'ensemble se décompose en fragments multiples plutôt que de se déformer, plastiquement, et de rester un objet s'opposant aux mouvements d'objets étant éventuellement la cause d'un impact sur l'ensemble.

Selon l'invention, l'ensemble est composé de différents éléments qui sont connectés grâce à des connexions frangibles, lesdites connexions offrant à l'ensemble la frangibilité souhaitée. Dans le texte présent, le terme « élément » fait référence au panneau photovoltaïque ou à l'un des modules qui, une fois assemblés, forment la structure de support.

L'ensemble selon l'invention est adapté pour fonctionner de façon optimale afin de ne pas perdre son intégrité sous l'influence des forces statiques exercées sur l'ensemble. L'intégrité de l'ensemble ne doit pas être mise en péril par des forces extérieures, même dynamiques.

L'ensemble selon l'invention est tout particulièrement adapté pour être utilisé dans les aéroports. Afin d'être capable de fonctionner convenablement dans les aéroports, l'ensemble doit être particulièrement solide et rigide pour répondre aux spécificités opérationnelles de son fonctionnement normal, au niveau spécifié de la vitesse du vent.

A titre d'exemple, une vitesse du vent de 140 km/h ne doit pas mettre en danger l'intégrité de l'ensemble. De plus, l'ensemble doit être suffisamment solide et rigide pour supporter une couche de glace de 12,5 mm, ainsi que la grêle. L'ensemble doit également être capable de résister à un niveau plus élevé de vitesse de vent, comme par exemple 210 km/h. Cette obligation répond des conditions spécifiques que l'on retrouve autour des pistes aéronautiques.

Afin d'obtenir la frangibilité nécessaire à l'utilisation de l'ensemble selon l'invention dans les aéroports, ledit ensemble doit être capable de se briser, de se déformer ou de céder aisément lorsqu'il est soumis à des forces soudaines de collision d'un moyen de transport, tel qu'un aéronef, avec une masse de 3000 kg qui se déplace en vol à 140 km/h (par exemple juste après le décollage) ou à la surface, avec une vitesse de 50 km/h.

L'ensemble selon l'invention est également adapté pour être utilisé aux abords soit d'un axe routier ou autoroutier soit d'un axe ferroviaire. En effet, d'importants espaces sont disponibles le long des axes routiers ou ferroviaires et peuvent accueillir l'ensemble selon l'invention, à condition que leur installation en ces endroits ne mette pas les occupants des moyens de transport en danger en cas d'accident.

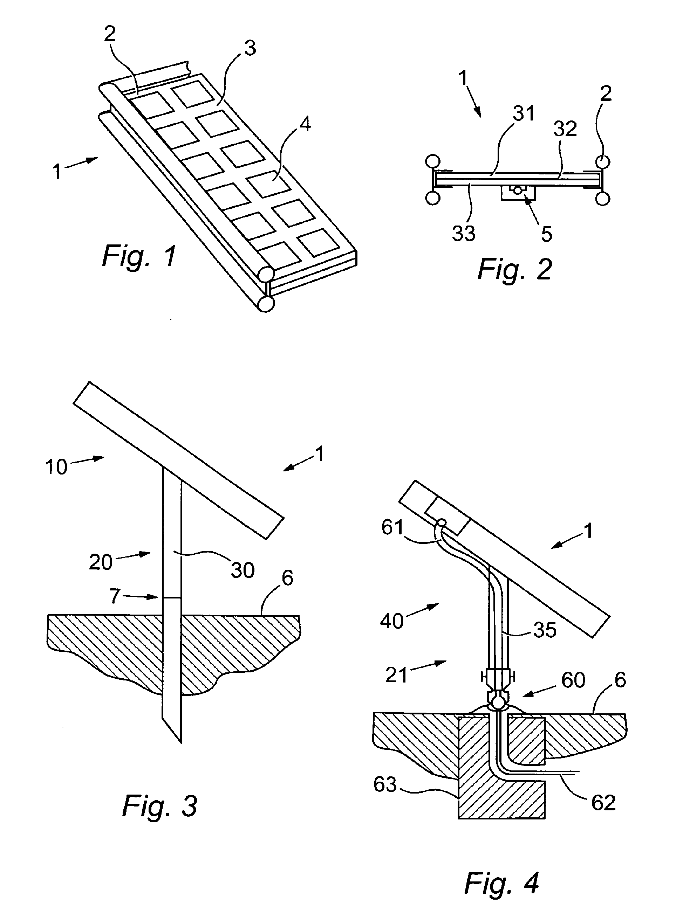

La figure 1 montre, en perspective, un panneau photovoltaïque 1 pourvu, autour de son périmètre, d'un encadrement 2. Cet encadrement 2 peut être total ou partiel sur la périphérie. Cet encadrement 2 présente deux fonctions.

La première est de donner au panneau photovoltaïque 1 une certaine rigidité permettant audit panneau de résister à l'environnement.

L'encadrement 2 peut, par ailleurs, être utilisé pour connecter le panneau photovoltaïque 1 à la structure de support sans prendre le risque d'abîmer la face 3 du panneau photovoltaïque 1, adaptée pour être exposée aux rayons solaires.

Le panneau photovoltaïque 1 est montré, en coupe, dans la figure 2. Dans la figure 2, l'encadrement 2 est clairement visible. Le panneau photovoltaïque 1 comprend au moins trois couches. La première couche 31 comprend un matériau translucide permettant de laisser pénétrer le plus de lumière possible dans le panneau photovoltaïque 1. La couche intermédiaire 32 comprend les cellules photovoltaïques qui sont protégées, en leurs faces exposées, par la couche 31. L'autre face de la couche intermédiaire 32 est protégée par une couche 33. L'espace entre les couches 31 et 33 contient, par exemple, un adhésif permettant de fixer les différentes cellules photovoltaïques 4 et de lier l'ensemble du panneau.

Une connexion dans un boitier 5, permettant de connecter le panneau photovoltaïque 1 soit à un fil électrique, soit à une protection électrique, soit à un convertisseur électrique, est montrée au dessous dudit panneau photovoltaïque 1. De façon alternative, la connexion 5 peut être située latéralement à la frange du panneau photovoltaïque 1. De façon alternative, le boîtier 5 peut donc contenir lui-même une protection électrique et un convertisseur.

Un exemple de réalisation d'un ensemble 10 permettant de comprendre l'invention est montré en figure 3. L'ensemble 10 comprend un panneau photovoltaïque 1 et une structure de support 20 comportant un pied 30 permettant de fixer l'ensemble 10 sur ou dans une surface, par exemple la terre 6. Dans le pied 30, une collerette est prévue (par exemple fabriquée à la dimension adéquate) afin de créer une zone fragile dans le pied 30 et permettre audit pied 30 une frangibilité offrant la possibilité de céder au niveau du sol en cas d'impact sur l'ensemble 10.

Selon la figure 3, le pied 30 est fixé dans le sol 6. De façon alternative, à la surface du sol, le pied 30 peut être fabriqué dans une matière lourde comme le béton par exemple, facilitant l'installation de l'ensemble 10.

Dans la figure 4, un ensemble 40 montrant le passage d'un câble dans la structure de support est montré. L'ensemble 40 comprend un panneau photovoltaïque 1 et une structure de support 21, comportant un pied 35 permettant de fixer la structure de support 21 dans le sol 6. La structure de support 21 peut être utilisée à la place de la structure de support 20, telle que montrée en figure 3, ou en combinaison avec cette dernière.

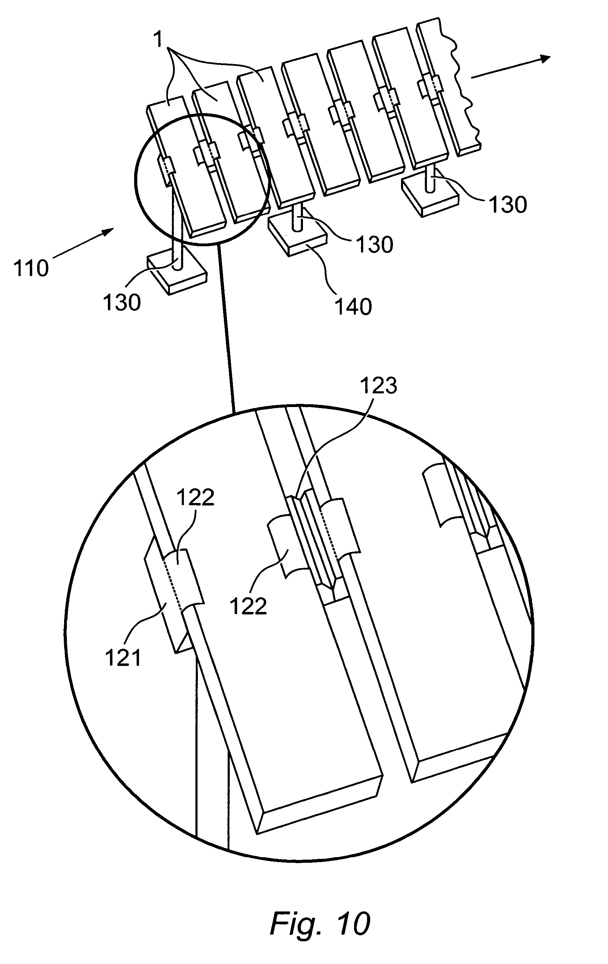

Différents panneaux photovoltaïques peuvent être connectés entre eux, ce qui est montré en figure 10. Les différents panneaux photovoltaïques 1 peuvent être connectés entre eux à l'aide de fils électriques. Sur une série de panneaux photovoltaïques, une structure de support 21 recevant le câble de transport d'énergie transitant vers le sol peut être pourvue d'une connexion électrique frangible, grâce à un connecteur 60, permettant de connecter un fil électrique 61, connecté lui-même à un ou à une série de panneaux photovoltaïques 1, à un fil électrique 62 faisant partie d'un réseau électrique.

La connexion 60 comporte des moyens permettant d'une part de fixer le pied 35, de façon suffisamment solide, sur le sol 6 mais également de garantir la possibilité de couper la connexion électrique entre les fils électriques 61 et 62 en cas d'impact sur l'ensemble 40.

Afin d'optimiser la construction, un élément 63 (par exemple en béton), permettant de guider la dernière partie du fil électrique 62 vers le connecteur 60, peut être installé.

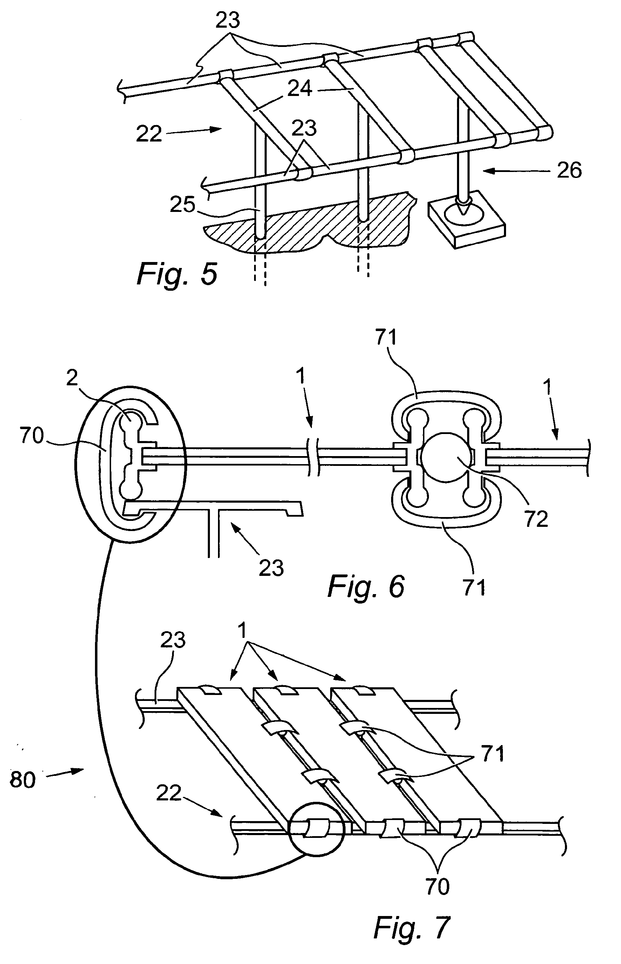

Une structure de support 22 est montrée en figure 5 qui comprend plusieurs éléments de construction comprenant des modules 23, lesdits modules 23 étant utilisés pour former des supports essentiellement horizontaux dans la longueur de la structure de support 22. Par ailleurs, la structure de support 22 comprend des modules 24 formant des supports perpendiculaires sur les ensembles des modules 23. De plus, la structure de support 22 comporte des modules 25 constituant des pieds permettant de connecter la structure de support 22 à une surface telle que le sol.

Les différents modules 23, 24 et 25, selon la figure 5, sont connectés entre eux grâce à des connexions frangibles. Les profilés des modules 23, 24 et 25 peuvent être également intrinsèquement frangibles, par exemple en introduisant des faiblesses mécaniques sur le même principe de la collerette 7 dans le pied 30. Lors d'un impact reçu sur la structure de support 22, les connexions entre les différents modules 23, 24 et 25 peuvent être brisées afin que ladite structure de support 22 se décompose en différents éléments de poids et de taille relativement limités.

La structure de support 22 selon la figure 5 est adaptée pour recevoir plusieurs panneaux photovoltaïques. Sur une structure de support 22, une vingtaine de panneaux photovoltaïques par exemple peut être fixée. Les différents panneaux photovoltaïques seront électriquement connectés les uns aux autres. Plusieurs pieds constitués par les modules 25 seront utilisés, par structure de support 22, afin de fixer ladite structure de support 22 aux surfaces telles que le sol.

Il est possible qu'un ou plusieurs pieds constitués par les modules 25, fixés au sol, soient nécessaires pour maintenir la structure de support 22 sur le sol (des pieds sont montrés par exemple en figures 5 et 10). Par structure de support 22, au moins un pied 26 est adapté pour guider la connexion électrique des panneaux photovoltaïques, fixée sur la structure de support 22, vers un réseau électrique dans le sol similaire à ce qui a été expliqué en faisant référence à la figure 4.

Une façon, selon laquelle les panneaux photovoltaïques 1 peuvent être fixés sur la structure de support 22 selon la figure 5, est montrée en figure 6. L'encadrement 2 en périmètre des panneaux peut être utilisé pour fixer des agrafes 70 qui sont, d'un côté fixées sur l'encadrement 2 et, d'un autre, sont fixées sur une partie d'un élément 23 faisant lui-même partie de la structure de support 22. Une connexion frangible entre le panneau photovoltaïque 1 et l'élément 23 est obtenue de cette façon. L'agrafe 70 doit présenter les caractéristiques techniques pour pouvoir se briser ou se déformer en cas d'impact, permettant ainsi aux éléments 23 et aux panneaux photovoltaïques 1 de se désolidariser.

La figure 6 montre également que les différents panneaux photovoltaïques 1 seront connectés grâce à des agrafes 71. Entre deux panneaux photovoltaïques 1, il est possible d'insérer un élément 72 composé d'une matière flexible, telle que du caoutchouc. Cet élément 72 a pour but d'emmagasiner de l'énergie dans la structure. Lorsque les deux panneaux photovoltaïques 1 sont connectés à l'aide des agrafes 71, l'élément 72 est comprimé. Du fait de cette compression, l'élément 72 maintient, comme un ressort, une pression sur les agrafes 71. Cette force de maintien assure une certaine rigidité dans la structure finale.

En cas d'impact, les agrafes 71 sont brisées ou déformées et les différents panneaux photovoltaïques 1 peuvent se désolidariser les uns des autres. L'énergie stockée dans les éléments flexibles 72 a pour effet de faciliter cette désolidarisation. Lorsque les agrafes 71 ont disparu, les différents éléments de l'ensemble selon l'invention se désolidarisent aisément les uns des autres grâce à cette énergie emmagasinée.

En faisant référence à la figure 6, l'on peut ajouter que, dans un mode de réalisation préféré, les éléments de matière flexible 72 peuvent présenter deux fonctions différentes.

Dans un premier temps, les éléments flexibles 72 ont pour but d'emmagasiner de l'énergie dans la structure, tel que cela est décrit ci-dessus. Dans un deuxième temps, les éléments flexibles 72 peuvent être utilisés pour obtenir une connexion électrique entre des panneaux photovoltaïques 1. Dans le cas où l'élément en matière flexible 72 présente en même temps les deux fonctions différentes, une connexion électrique frangible entre les différents panneaux photovoltaïques est assurée.

La construction selon la figure 6, en utilisant des agrafes 70 et 71, permet aux différents éléments de l'ensemble d'être retenus d'une manière flexible, permettant notamment les dilatations et garantissant en même temps une rigidité suffisante pour résister aux influences extérieures telles que le vent. En cas d'impact, la résistance de l'ensemble est déterminée par celle des agrafes 70 et 71 et des éléments flexibles 72 qui les maintiennent en compression.

L'ensemble 80 correspondant, ayant des panneaux photovoltaïques 1 sur une structure de support 22 selon l'invention, est montré en figure 7. Cette figure montre, en perspective, les panneaux 1, les éléments 23 de la structure 22 et les différentes agrafes 70 et 71 permettant de tenir les différents éléments de l'ensemble.

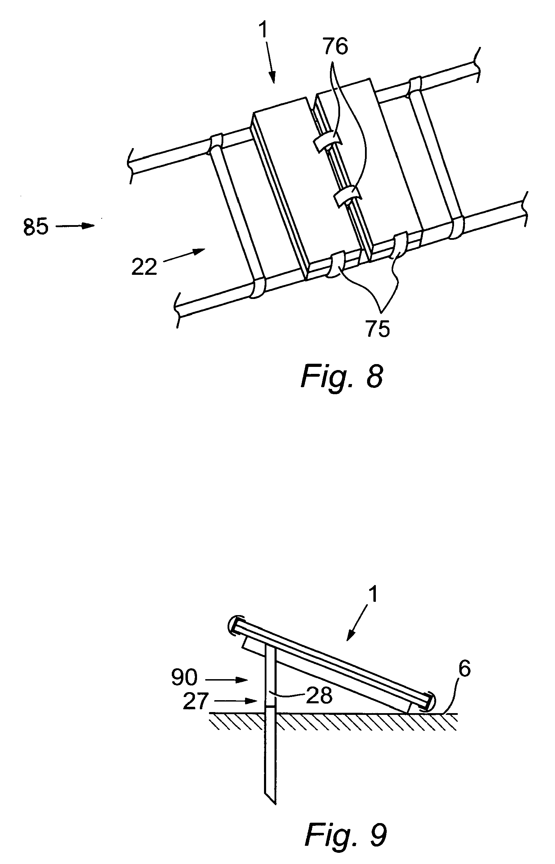

Dans la figure 8, une alternative est montrée d'une connexion entre un panneau photovoltaïque 1 sur une structure de support 22 dans un ensemble 85 selon l'invention. Selon la figure 8, les panneaux photovoltaïques sont suffisamment rigides et ne comprennent pas d'encadrement et les agrafes 75 et 76 sont fixées directement sur la surface exposée des panneaux photovoltaïques 1.

Dans la figure 9, un exemple d'ensemble 90 d'un panneau photovoltaïque 1 et d'une structure de support 27 est montré. L'ensemble 90, selon la figure 9, est relativement simple dans lequel une extrémité du panneau photovoltaïque 1 est directement posée sur le sol 6. Grâce à l'utilisation d'un pied 28, un support frangible pour le panneau photovoltaïque 1 est garanti.

Dans la figure 10, un ensemble 110 selon l'invention d'une série de panneaux photovoltaïques 1 et d'une structure de support est montré. La structure de support comprend une plaque longitudinale 121 pourvue de connecteurs 122. Une alternative à cette plaque pourrait être constituée de deux plaques plus fines ou deux profils écartés. La plaque longitudinale est adaptée pour supporter une série de panneaux photovoltaïques 1. Chacun des panneaux photovoltaïques 1 est fixé sur la plaque 121 grâce à deux éléments de connexion 122.

Dans un premier temps, les deux éléments de connexion 122 sont connectés aux plaques 121 d'une manière frangible. En cas de choc sur l'ensemble 110, les connexions entre la plaque 121 et les éléments de fixation 122 peuvent se briser afin de libérer les panneaux photovoltaïques 1 et ainsi désolidariser lesdits panneaux photovoltaïques 1 de cette plaque 121.

Dans un deuxième temps, la plaque 121 est pourvue d'éléments sectionnés 123 afin d'affaiblir ladite plaque 121. En cas d'impact, les éléments sectionnés 123 peuvent se briser afin de permettre à la plaque 121 de se décomposer de plusieurs éléments de taille restreinte.

L'ensemble 110 comprend plusieurs pieds 130 pourvus, en leurs extrémités, de pieds 140. Les pieds 140 peuvent se présenter sous plusieurs formes, notamment sous la forme d'un bloc d'une matière lourde telle que le béton.

En utilisant de tels pieds 140, l'installation d'un ensemble 110 selon l'invention peut s'effectuer de façon relativement rapide. En effet, des pieds 130 pourvus de pieds 140 peuvent être fabriqués en atelier. De cette façon, des plaques 121 comportant des séries de panneaux photovoltaïques 1 peuvent être fabriquées. Grâce à un procédé d'assemblage relativement rapide, des pieds 130 / 140 et des plaques 121 peuvent être réalisées sur place.

De façon spécifique, dans le cas où l'ensemble 110 est installé sur un aérodrome, les horaires d'installation de tels dispositifs pourraient être assez restreints. Il convient que l'ensemble 110 puisse être installé relativement rapidement.

Il est préconisé différentes alternatives d'adaptation du positionnement de l'ensemble en fonction du déplacement du soleil afin d'augmenter la capacité de transformation d'énergie photovoltaïque.

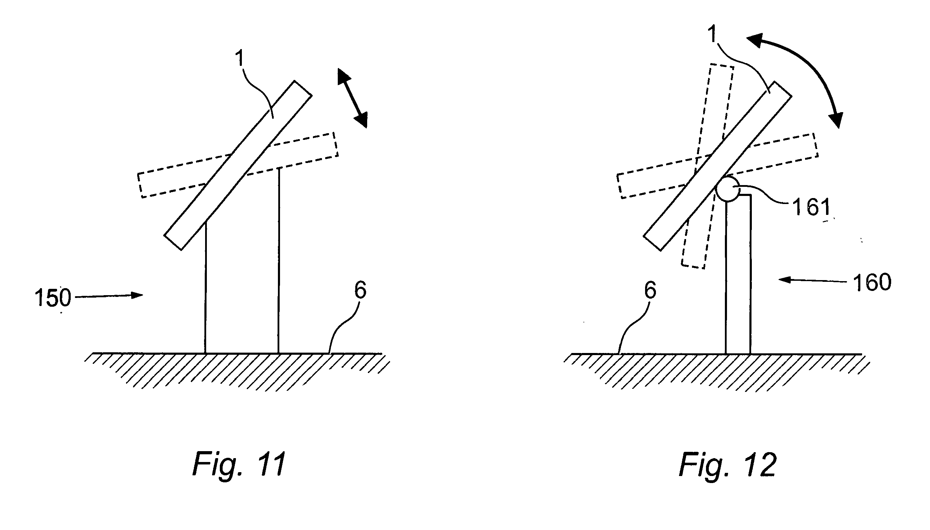

De façon alternative en figure 11, une structure de support 150 est montrée de façon schématique dans laquelle un panneau photovoltaïque 1 peut être fixé et peut présenter une première inclinaison et une deuxième inclinaisons par rapport au sol 6. La forme d'une structure de support 150 est relativement simple et peut être utilisée pour installer le panneau photovoltaïque 1 dans une première position « hiver » (tel qu'indiqué avec des lignes continues) et une deuxième position « été » (tel qu'indiqué avec des lignes pointillées).

De façon alternative, une construction réalisée selon la figure 12 peut être réalisée. La structure du support 160 est pourvue d'un axe de rotation horizontal 161 permettant de supporter les panneaux photovoltaïques 1 et de positionner ledit axe de rotation dans une inclinaison préférée par rapport au sol 6 suivant la position haute ou basse du soleil dans sa course

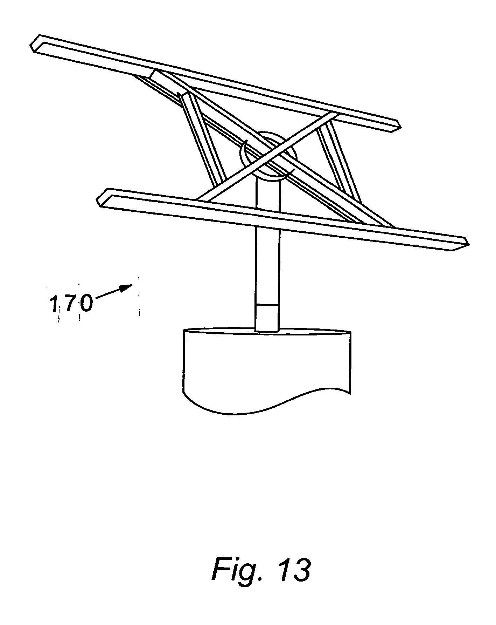

De façon alternative, une construction réalisée selon la figure 13 peut être réalisée. La structure du support 170 est pourvue d'un axe de rotation vertical permettant de supporter les panneaux photovoltaïques 1 et de positionner ledit axe de rotation dans une position préférée par rapport au mouvement du soleil d'est en ouest.

## Revendications

1. Ensemble frangible (80 ; 85; 110) composé d'éléments consistant en au moins un panneau photovoltaïque (1) et en une pluralité de modules (23; 24; 25; 26; 121; 130) formant une structure de support (22 ; 120; 121; 130) permettant de maintenir ledit panneau photovoltaïque dans une position fixe par rapport à une surface (6), dans lequel les modules (23 ; 24 ; 25 ; 26 ; 121; 130) de la structure de support (22 ; 120; 121; 130) entre eux d'une part, ainsi que, respectivement, le panneau photovoltaïque (1) et la structure de support (22 ; 120; 121; 130) d'autre part, sont mutuellement connectés grâce à des connexions frangibles, adaptées pour se briser en cas d' impact afin de permettre ainsi à l'ensemble (80 ; 85 ; 110) de perdre son intégrité lors dudit impact.

2. Ensemble (80 ; 85) selon la revendication 1, dans lequel le panneau photovoltaïque (1) et la structure de support (22) sont mutuellement connectés grâce à des agrafes frangibles (70 ; 71 ; 75 ; 76).

3. Ensemble (110) selon l'une des revendications 1 et 2, dans lequel les modules (121) de la structure de support (120; 121; 130) sont mutuellement connectés en étant assemblés avec des fusibles (23), lesdits fusibles (123) étant adaptés et offrant des endroits à la structure de support (120; 121; 130) lui permettant de se briser ou de se déformer.

4. Ensemble (80) selon l'une des revendications 1 à 3 dans lequel l'ensemble (80) est pourvu d'éléments flexibles (72) adaptés pour emmagasiner de l'énergie afin d'exercer une pré-tension sur les différents éléments (1 ; 23) de l'ensemble (80) et permettant de libérer l'énergie emmagasinée dans lesdits éléments flexibles (72) en permettant auxdits éléments (1; 23; 24; 25; 28; 30; 35; 121; 130) de l'ensemble de se séparer lors d'un impact.

5. Ensemble (80) selon la revendication 4, dans lequel les éléments flexibles (72) présentent une forme de balle et sont constitués de matière souple par exemple le caoutchouc.

6. Ensemble (80 ; 110) selon l'une des revendications 1 à 5, dans lequel le panneau photovoltaïque (1) est pourvu d'un encadrement (2) autour d'au moins une partie de sa périphérie.

7. Ensemble (80 ; 110) selon la revendication 6, dans lequel l'encadrement (2) est utilisé pour accrocher le panneau photovoltaïque (1) à la structure de support (22 ; 120 ; 121; 130).

8. Ensemble (80 ; 85 ; 110) selon l'une des revendications 1 à 7, dans lequel le panneau photovoltaïque (1) est rectangulaire et dans lequel la longueur du panneau (1) est au moins égale à trois fois la largeur dudit panneau (1).

9. Ensemble (80 ; 110) selon l'une des revendications 1 à 8, dans lequel la structure de support (22 ; 120 ; 121 ; 130) est pourvue d'un pied (25 ; 26 ; 130) permettant de positionner la structure de support (22 ; 120 ; 121; 130) sur une surface (6).

10. Ensemble selon l'une des revendications 1 à 9, dans lequel la structure de support est pourvue d'un guide permettant de conduire un fil électrique (61) du panneau photovoltaïque (1) vers un réseau électrique (62), dans lequel la structure de support est pourvue d'un connecteur (60) permettant une connexion électrique frangible entre la structure de support et le réseau électrique (62).

11. Ensemble selon l'une des revendications 1 à 10, dans lequel la structure de support (150 ; 160) est pourvue de moyens ajustables permettant de fixer le panneau photovoltaïque (1) dans une première inclinaison et dans une seconde inclinaison par rapport à la surface (6).

## Claims

1. A frangible assembly (80; 85; 110) composed of elements consisting of at least one photovoltaic panel (1) and a plurality of modules (23; 24; 25; 26; 121; 130) which form a support structure (22; 120; 121; 130) making it possible to keep said photovoltaic panel in a fixed position relative to a surface (6), wherein the modules (23; 24; 25; 26; 121; 130) of the support structure (22; 120; 121; 130), between them on the one hand as well as, respectively, the photovoltaic panel (1) and the support structure (22; 120; 121; 130) on the other hand, are mutually connected by means of frangible connections suitable to break in the event of impact in order to thus allow the assembly (80; 85; 110) to lose its integrity during said impact.

2. The assembly (80; 85) according to Claim 1, wherein the photovoltaic panel (1) and the support structure (22) are mutually connected by means of frangible fasteners (70; 71; 75; 76).

3. The assembly (110) according to one of claims 1 and 2, wherein the modules (121) of the support structure (120; 121; 130) are mutually connected by being assembled with fuse wires (23), said fuse wires (123) being suitable and giving the support structure (120; 121; 130) locations which allow it to break or deform.

4. The assembly (80) according to one of claims 1 to 3 wherein the assembly (80) is provided with flexible elements (72) suitable for storing energy so as to exert a pretension on the various elements (1; 23) of the assembly (80) and making it possible to release the energy stored in said flexible elements (72) by allowing said elements (1; 23; 24; 25; 28; 30; 35; 121; 130) of the assembly to separate upon impact.

5. The assembly (80) according to claim 4, wherein the flexible elements (72) are ball-shaped and are made of resilient material, for example rubber.

6. The assembly (80; 110) according to one of claims 1 to 5, wherein the photovoltaic panel (1) is provided with a frame (2) around at least part of its periphery.

7. The assembly (80; 110) according to claim 6, wherein the frame (2) is used to hook the photovoltaic panel (1) onto the support structure (22; 120; 121; 130).

8. The assembly (80; 85; 110) according to one of claims 1 to 7, wherein the photovoltaic panel (1) is rectangular and wherein the length of the panel (1) is at least equal to three times the width of said panel (1).

9. The assembly (80; 110) according to one of claims 1 to 8, wherein the support structure (22; 120; 121; 130) is provided with a leg (25; 26; 130) which makes it possible to position the support structure (22; 120; 121; 130) on a surface (6).

10. The assembly according to one of claims 1 to 9, wherein the support structure is provided with a guide which makes it possible to lead an electric wire (61) from the photovoltaic panel (1) towards a power network (62), wherein the support structure is provided with a connector (60) which makes a frangible electrical connection possible between the support structure and the power network (62).

11. The assembly according to one of claims 1 to 10, wherein the support structure (150; 160) is provided with adjustable means which make it possible to fix the photovoltaic panel (1) at a first incline and at a second incline relative to the surface (6).

## Patentansprüche

1. Eine zerbrechbare Anordnung (80; 85; 110), die Elemente beinhaltet, bestehend aus mindestens einem fotovoltaischen Paneel (1) und einer Vielzahl von Modulen (23; 24; 25; 26; 121; 130), die eine Trägerstruktur (22; 120; 121; 130) bilden, welche das Halten des fotovoltaischen Paneels in einer ortsfesten Position hinsichtlich einer Oberfläche (6) ermöglicht, wobei die Module (23; 24; 25; 26; 121; 130) der Trägerstruktur (22; 120; 121; 130) einerseits untereinander sowie andererseits jeweils das fotovoltaische Paneel (1) und die Trägerstruktur (22; 120; 121; 130) mittels zerbrechbarer Verbindungen miteinander verbunden sind, wobei diese angepasst sind, um im Falle eines Aufschlags zu brechen, damit die Anordnung (80; 85; 110) auf diese Weise während des Aufschlags auseinanderbrechen kann.

2. Anordnung (80; 85) gemäß Anspruch 1, wobei das fotovoltaische Paneel (1) und die Trägerstruktur (22) mittels zerbrechbarer Klammern (70; 71; 75; 76) miteinander verbunden sind.

3. Anordnung (110) gemäß einem der Ansprüche 1 und 2, wobei die Module (121) der Trägerstruktur (120; 121; 130) durch Zusammenfügen mit Sicherungen (23) miteinander verbunden sind, wobei die Sicherungen (123) angepasst sind und der Trägerstruktur (120; 121; 130) Stellen bereitstellen, die es ihr ermöglichen zu brechen oder sich zu verformen.

4. Anordnung (80) gemäß einem der Ansprüche 1 bis 3, wobei die Anordnung (80) mit biegsamen Elementen (72) versehen ist, die angepasst sind, um Energie zu speichern, damit auf die verschiedenen Elemente (1; 23) der Anordnung (80) eine Vorspannung angelegt werden kann und die in den biegsamen Elementen (72) gespeicherte Energie freigegeben werden kann, wobei ermöglicht wird, dass sich die Elemente (1; 23; 24; 25; 28; 30; 35; 121; 130) der Anordnung während eines Aufschlags voneinander lösen.

5. Anordnung (80) gemäß Anspruch 4, wobei die biegsamen Elemente (72) die Form eines Balls haben und aus einem weichen Material, zum Beispiel Kautschuk, sind.

6. Anordnung (80; 110) gemäß einem der Ansprüche 1 bis 5, wobei das fotovoltaische Paneel (1) um mindestens einen Teil seines Umfangs mit einem Rahmen (2) versehen ist.

7. Anordnung (80; 110) gemäß Anspruch 6, wobei der Rahmen (2) verwendet wird, um das fotovoltaische Paneel (1) an der Trägerstruktur (22; 120; 121; 130) zu befestigen.

8. Anordnung (80; 85; 110) gemäß einem der Ansprüche 1 bis 7, wobei das fotovoltaische Paneel (1) rechteckig ist und wobei die Länge des Paneels (1) mindestens der dreifachen Breite des Paneels (1) entspricht.

9. Anordnung (80; 110) gemäß einem der Ansprüche 1 bis 8, wobei die Trägerstruktur (22; 120; 121; 130) mit einem Fuss (25; 26; 130) versehen ist, der das Positionieren der Trägerstruktur (22; 120; 121; 130) auf einer Oberfläche (6) ermöglicht.

10. Anordnung gemäß einem der Ansprüche 1 bis 9, wobei die Trägerstruktur mit einer Führung versehen ist, die das Leiten eines elektrischen Kabels (61) vom fotovoltaischen Paneel (1) zu einem elektrischen Netz (62) hin ermöglicht, wobei die Trägerstruktur mit einem Verbindungsstück (60) versehen ist, das eine zerbrechbare elektrische Verbindung zwischen der Trägerstruktur und dem elektrischen Netz (62) ermöglicht.

11. Anordnung gemäß einem der Ansprüche 1 bis 10, wobei die Trägerstruktur (150; 160) mit einstellbaren Mitteln versehen ist, die das Fixieren des fotovoltaischen Paneels (1) in einer ersten Neigung und in einer zweiten Neigung hinsichtlich der Oberfläche (6) ermöglichen.
